# EUROPEAN PATENT SPECIFICATION

(11) **EP 3 991 602 B1**
(45) Date of publication and mention of the grant of the patent: **28.06.2023**
(21) Application number: 21176166.3
(22) Date of filing: 27.05.2021
(51) Int. Cl.: A47C 1/026, A47C 3/16, A47C 17/04, F16C 11/04, F16C 11/10

(54) **ANGLE ADJUSTMENT METAL FITTING AND LEGLESS CHAIR AND SOFA USING SAME**
WINKELVERSTELLBARER METALLBESCHLAG UND BEINLOSER STUHL UND BEINLOSES SOFA DAMIT
ACCESSOIRE MÉTALLIQUE DE RÉGLAGE D'ANGLE ET CHAISE ET CANAPÉ SANS PIEDS L'UTILISANT

(30) Priority: 30.10.2020 JP 2020182908
(43) Date of publication of application: 04.05.2022
(73) Proprietor: Koyo Giken Kabushiki Kaisha, Sakai City, Osaka 593-8312 (JP)
(72) Inventor: YAMASHITA, Masanobu, Sakai-shi, 593-8312 (JP); NAGATANI, Yoichi, Sakai-shi, 593-8312 (JP)
(74) Representative: Mewburn Ellis LLP

(56) References cited:
- JP-A- 2006 034 709
- US-A1- 2010 237 667

## Description

### BACKGROUND

### Technical Field

The present invention relates to an angle adjustment metal fitting and a chair such as a legless chair and a sofa.

### Related Art

An example of conventional angle adjustment metal fittings includes a legless chair ratchet metal fitting attached to a connection portion between a seat plate and a backrest plate of a legless chair, for adjusting the inclined angle of the backrest plate with respect to the seat plate to a desired angle (see Japanese Utility Model No. 59-20118). The document JP2006034709A is considered to represent background art being useful for understanding the invention.

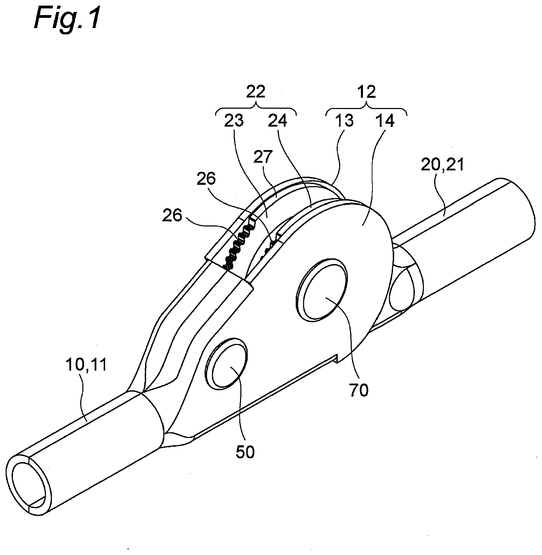

With the legless chair ratchet metal fitting described above, to adjust a composition frame B of the backrest plate to a desired inclined angle with respect to a composition frame A of the seat plate as illustrated in FIG. 1, the composition frame B needs to be tilted to the horizontal position and then raised. Thus, adjustment of the inclined angle requires a cumbersome operation.

In particular, there is a problem in that the inclined angle of the composition frame B cannot be adjusted when there is not enough space between the composition frame B and a wall surface, due to the composition frame B being arranged close to the wall.

### SUMMARY

In view of the above problems, an object of an angle adjustment metal fitting according to the present invention is to provide an angle adjustment metal fitting enabling an angle to be adjusted without unfolding two unfoldable components to the horizontal position.

In order to achieve the above object, an angle adjustment metal fitting according to the present invention includes:
a first member 10 including a rotation receiving portion 12 having a pair of opposing side wall portions 13 and 14, the rotation receiving portion 12 having a main shaft 70 and an auxiliary shaft 50 inserted in parallel to each other while being separated by a predetermined distance;
a second member 20 including a rotating portion 22 having a gear portion 26 and an arcuate surface portion 27 continuous to the gear portion 26, the second member 20 being provided between the side wall portions 13 and 14 of the first member 10, the rotating portion 22 being supported to be rotatable about the main shaft 70;
a claw member 30 having an inward surface of a control receiving portion 34 extending from a claw member main body 31, provided with a toothed surface 35 including a plurality of claw portions arranged side by side, the claw member 30 being rotatably supported by the auxiliary shaft 50 of the first member 10;
a spring member 40 that is attached in the first member 10 and applies biasing force for rotating the claw member 30 toward the second member 20; and
a claw control member 60 that includes a first control portion 64 extending from a claw control member main body 61, is rotatably supported by the main shaft 70, and is capable of rotating together with the second member 20,
in which it is configured such that the claw control member 60 has a position restricted so as not to rotate together while the second member 20 relatively rotates in a folding direction, and a meshing state between the gear portion 26 of the second member 20 and the toothed surface 35 of the claw member 30 is released when the toothed surface 35 of the claw member 30 climbs over the arcuate surface portion 27 of the rotating portion 22,
while the second member 20 then relatively rotates in an unfolding direction, the first control portion 64 of the claw control member 60 that rotates together with the second member 20 restricts a position of the claw member 30, and the toothed surface 35 of the claw member 30 has a position restricted so as not to mesh with the gear portion 26 of the second member 20, and
when the second member 20 is then operated to be relatively rotated by a predetermined small angle in the folding direction, the position of the claw control member 60 that rotates together with the second member 20 is restricted whereas the restriction of the position of the claw member 30 by the claw control member 60 is released, to make the toothed surface 35 of the claw member 30 mesh with the gear portion 26 of the second member 20 to restrict the relative rotation of the second member 20 in the unfolding direction.

According to the present invention, by relatively rotating the second member in the folding direction, in the unfolding direction, and in the folding direction, an unfolded angle of the second member can be adjusted at a desired position without tilting the second member to the horizontal position. Therefore, adjustment of the unfolded angle is not cumbersome.

In particular, even if the second member is arranged near a wall surface and thus there is not so much space between the second member and the wall surface, the unfolded angle can be adjusted because it is not necessary to unfold the second member to the horizontal position, whereby an angle adjustment metal fitting with high usability can be obtained.

As an embodiment of the present invention, the first control portion 64 extending from the claw control member main body 61 of the claw control member 60 may be configured to be brought into contact with a bottom surface of the first member 10 to restrict the position of the claw control member 60 itself.

With the present embodiment, the position of the claw control member 60 can be restricted by bringing the first control portion 64 into contact with the bottom surface of the first member 10. Therefore, an angle adjustment metal fitting having stable operation characteristics can be obtained.

As another embodiment of the present invention, a second control portion 67 extending from the claw control member main body 61 of the claw control member 60 may be configured to be brought into contact with the claw member main body 31 of the claw member 30 to restrict the position of the claw control member 60 itself.

With the present embodiment, since the main shaft and the auxiliary shaft can be manufactured with high dimensional accuracy of the distance between their fulcrums, an assembly error is small, whereby an angle adjustment metal fitting having a small variation in operation characteristics can be obtained.

As another embodiment of the present invention, a position restricting rib 22a of the second member 20 may be configured to be brought into contact with the second control portion 67 that comes into contact with the claw member main body 31 of the claw member 30, to restrict the position of the second member 20 itself.

With the present embodiment, the position of the second member 20 itself can be restricted, so that the rotation operation of the second member 20 can be suppressed to the minimum necessary, and an angle adjustment metal fitting with high usability can be obtained.

As another embodiment of the present invention, the claw member 30 may be formed by joining two metal plates.

With the present embodiment, the claw member 30 can be formed by combining metal plates thinner than those in the above-described embodiment. Thus, an angle adjustment metal fitting that can be easily manufactured at a low cost can be obtained.

As a different embodiment of the present invention, annular ribs 63 may be provided to respective opening edge portions of a shaft hole 62 of the claw control member 60.

With the present embodiment, partial contact between the claw control member 60 and the rotating portion 22 of the second member 20 can be prevented, whereby an angle adjustment metal fitting having smooth operation characteristics can be obtained.

As another embodiment of the present invention, the claw control member 60 may be formed by joining and integrating two metal plates having annular ribs 63 formed by pressing.

With the present embodiment, since the annular ribs 63 are elastically deformed, and thus absorb and alleviate a component error and an assembly error, whereby an angle adjustment metal fitting having a small variation in operation characteristics can be obtained.

As another embodiment of the present invention, the spring member 40 may be formed by bending a linear spring member.

With the present embodiment, since the spring member 40 can be positioned by being inserted into the auxiliary shaft, an angle adjustment metal fitting that is easily assembled can be obtained.

As another embodiment of the present invention, the spring member 40 may be a leaf spring.

With the present embodiment, an angle adjustment metal fitting capable of more accurately applying biasing force can be obtained.

As a different embodiment of the present invention, the gear portion 26 may be provided with a step portion 26a positioned more on an inner side than the arcuate surface portion in a plate thickness direction.

With the present embodiment, even if burrs are generated in the gear portion during processing, such burrs do not come into contact with the inward surface of the rotating portion, whereby an angle adjustment metal fitting that requires a small number of processing steps and implements a smooth rotating operation can be obtained.

In order to achieve the above object, a legless chair or a sofa according to the present invention may be a legless chair or a sofa to which the above-described angle adjustment metal fitting is applied.

According to the present invention, by relatively rotating the second member in the folding direction, the unfolding direction, and the folding direction, the unfolding angle of the second members can be adjusted without tilting the second member to the horizontal position. Therefore, adjustment of the unfolded angle is not cumbersome.

In particular, even if the second member is arranged near the wall surface, it is not necessary to unfold the second member to the horizontal position. Therefore, the unfolded angle can be adjusted even when there is not so much space between the second member and the wall surface, whereby a legless chair and a sofa with high usability can be advantageously obtained.

### BRIEF DESCRIPTION OF DRAWINGS

FIG. 1 is a perspective view illustrating a first embodiment of an angle adjustment metal fitting according to the present invention;
FIG. 2 is an exploded perspective view of the angle adjustment metal fitting illustrated in FIG. 1;
FIG. 3 is an enlarged perspective view of a claw member illustrated in FIG. 2;
FIG. 4 is an enlarged perspective view of the claw member illustrated in FIG. 2 as viewed from another angle;
FIG. 5 is a perspective view of a spring member illustrated in FIG. 2;
FIG. 6 is a partial cross-sectional perspective view of the angle adjustment metal fitting illustrated in FIG. 1;
FIG. 7 is a front cross-sectional view of a main part of the angle adjustment metal fitting illustrated in FIG. 6;
FIG. 8 is a cross-sectional perspective view of the angle adjustment metal fitting illustrated in FIG. 1;
FIG. 9 is a front cross-sectional view of a main part of the angle adjustment metal fitting illustrated in FIG. 8;
FIG. 10 is a front cross-sectional view of a main part for describing an operation in the first embodiment of the angle adjustment metal fitting according to the present invention;
FIG. 11 is a front cross-sectional view of a main part for describing the operation of the angle adjustment metal fitting according to the present invention following FIG. 10;
FIG. 12 is a front cross-sectional view of a main part for describing the operation of the angle adjustment metal fitting according to the present invention following FIG. 11;
FIG. 13 is a front cross-sectional view of a main part for describing the operation of the angle adjustment metal fitting according to the present invention following FIG. 12;
FIG. 14 is a front cross-sectional view of a main part for describing the operation of the angle adjustment metal fitting according to the present invention following FIG. 13;
FIG. 15 is a front cross-sectional view of a main part for describing the operation of the angle adjustment metal fitting according to the present invention following FIG. 14;
FIG. 16 is a front cross-sectional view of a main part for describing the operation of the angle adjustment metal fitting according to the present invention following FIG. 15;
FIG. 17 is a front cross-sectional view of a main part for describing the operation of the angle adjustment metal fitting according to the present invention following FIG. 15;
FIG. 18 is a front cross-sectional view of a main part for describing the operation of the angle adjustment metal fitting according to the present invention following FIG. 17;
FIG. 19 is a perspective view illustrating a claw control member in a second embodiment of an angle adjustment metal fitting according to the present invention;
FIG. 20 is a longitudinal sectional perspective view illustrating a state in which the claw control member in FIG. 19 is incorporated;
FIG. 21 is a front cross-sectional view of a main part illustrating the state in which the claw control member in FIG. 19 is incorporated;
FIG. 22 is a perspective view illustrating a third embodiment of an angle adjustment metal fitting according to the present invention;
FIG. 23 is a longitudinal sectional view of the angle adjustment metal fitting illustrated in FIG. 22;
FIG. 24 is an exploded perspective view of the angle adjustment metal fitting illustrated in FIG. 22;
FIG. 25 is a perspective view of a claw control member illustrated in FIG. 24;
FIG. 26 is a front cross-sectional view of a main part of the angle adjustment metal fitting illustrated in FIG. 22;
FIG. 27 is a front cross-sectional view of a main part of the angle adjustment metal fitting illustrated in FIG. 22;
FIG. 28 is a front cross-sectional view of a main part for describing an operation in the third embodiment of the angle adjustment metal fitting according to the present invention;
FIG. 29 is a front cross-sectional view of a main part at another cutting position for describing the operation of the angle adjustment metal fitting according to the present invention following FIG. 28;
FIG. 30 is a front cross-sectional view of a main part for describing the operation of the angle adjustment metal fitting according to the present invention following FIG. 29;
FIG. 31 is a front cross-sectional view of a main part for describing the operation of the angle adjustment metal fitting according to the present invention following FIG. 30;
FIG. 32 is a front cross-sectional view of a main part for describing the operation of the angle adjustment metal fitting according to the present invention following FIG. 31;
FIG. 33 is a front cross-sectional view of a main part for describing the operation of the angle adjustment metal fitting according to the present invention following FIG. 32;
FIG. 34 is a front cross-sectional view of a main part for describing the operation of the angle adjustment metal fitting according to the present invention following FIG. 33;
FIG. 35 is a front cross-sectional view of a main part for describing the operation of the angle adjustment metal fitting according to the present invention following FIG. 34;
FIG. 36 is a front cross-sectional view of a main part for describing the operation of the angle adjustment metal fitting according to the present invention following FIG. 35;
FIG. 37 is a front cross-sectional view of a main part for describing the operation of the angle adjustment metal fitting according to the present invention following FIG. 36;
FIG. 38 is an exploded perspective view illustrating a fourth embodiment of an angle adjustment metal fitting according to the present invention;
FIG. 39 is a front cross-sectional view of a main part illustrating the fourth embodiment of the angle adjustment metal fitting according to the present invention;
FIG. 40 is a perspective view illustrating a fifth embodiment of an angle adjustment metal fitting according to the present invention;
FIG. 41 is a partial cross-sectional perspective view of the angle adjustment metal fitting illustrated in FIG. 40;
FIG. 42 is a perspective view of a main part of the angle adjustment metal fitting illustrated in FIG. 40;
FIG. 43 is a perspective view of a main part viewed from an angle different from that of the perspective view of the main part illustrated in FIG. 42;
FIG. 44 is a perspective view illustrating a claw member according to a fifth embodiment; and
FIG. 45 is an exploded perspective view of the claw member illustrated in FIG. 44.

### DETAILED DESCRIPTION

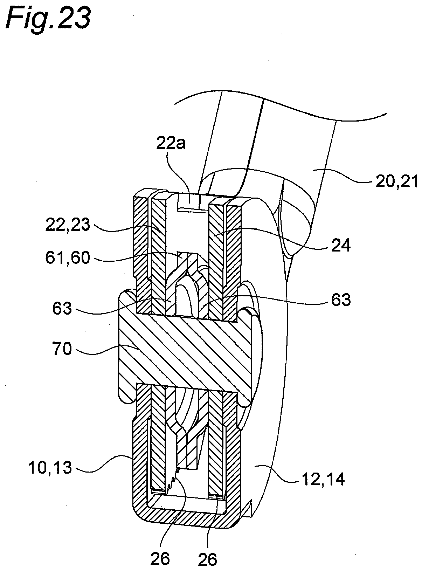

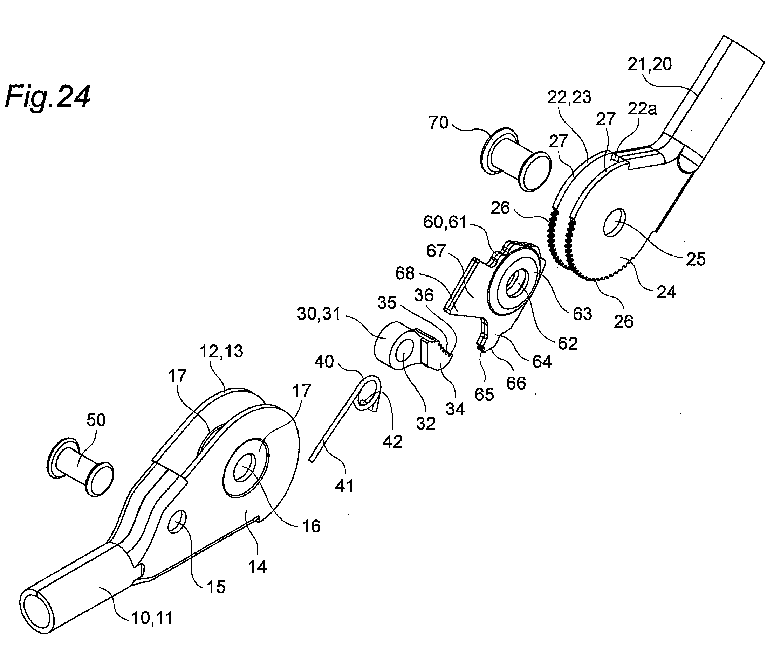

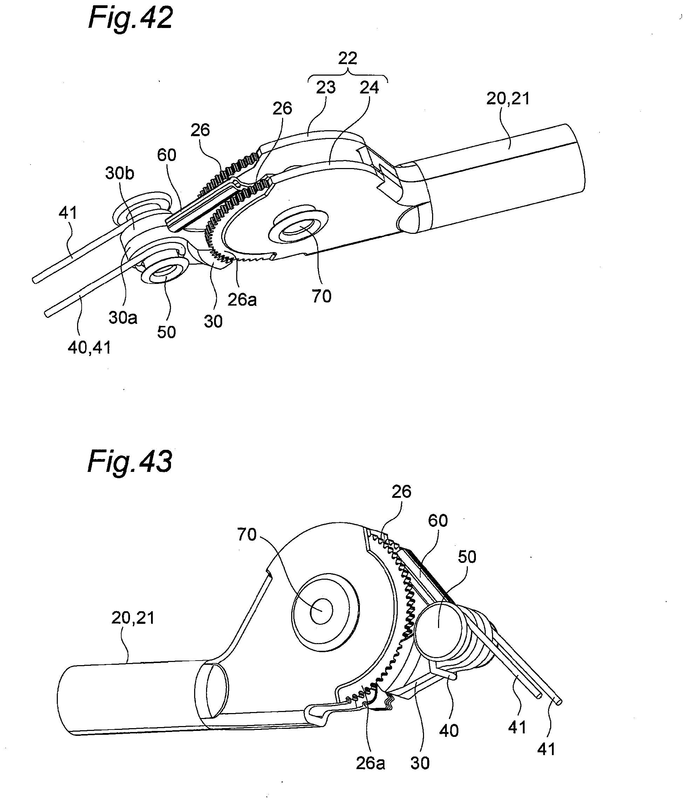

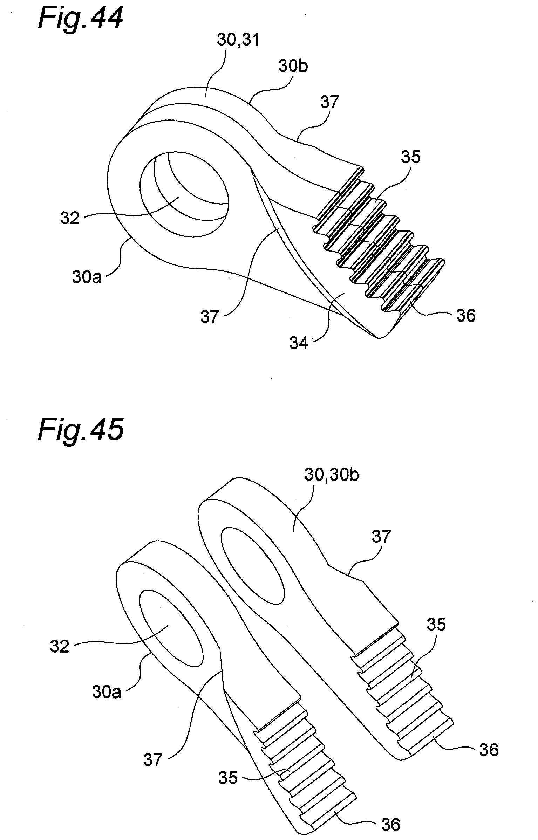

Embodiments according to the present invention will be described with reference to FIGS. 1 to 45.

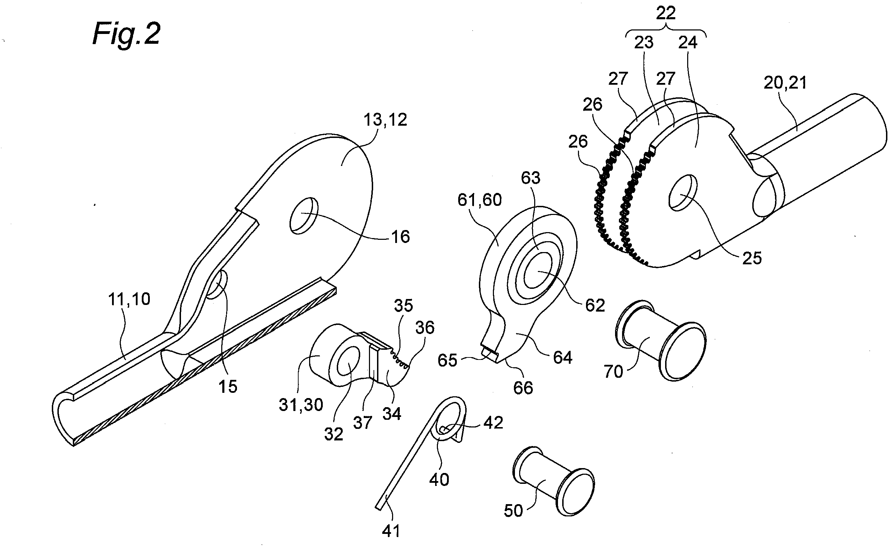

As illustrated in FIGS. 1 and 2, the angle adjustment metal fitting according to a first embodiment includes a first member 10, a second member 20, a claw member 30, a spring member 40, an auxiliary shaft 50, a claw control member 60, and a main shaft 70.

FIG. 2 is a cross-sectional view of the first member 10 for convenience of description.

The first member 10 includes an attachment portion 11 and a rotation receiving portion 12 continuous with the attachment portion 11. The rotation receiving portion 12 has a pair of opposing side wall portions 13 and 14. The pair of side wall portions 13 and 14 respectively have a first bearing hole 15 and a second bearing hole 16 coaxially provided.

Note that the first member 10 of the present embodiment is manufactured by performing pressing on a single metal plate, but is not necessarily limited to this. For example, the first member 10 may be manufactured by performing pressing on two separate metal plates, and then joining and integrating the metal plates.

Furthermore, the attachment portion 11 is not limited to a cylindrical shape, and may have, for example, a rectangular tube shape, a prismatic shape, or a plate shape.

The second member 20 includes an attachment portion 21 and a rotating portion 22 continuous with the attachment portion 21. The rotating portion 22 has a pair of substantially disk-shaped opposing gear plate portions 23 and 24. The pair of gear plate portions 23 and 24 have shaft holes 25 coaxially arranged. On the outer circumferential surfaces of the gear plate portions 23 and 24, a gear portion 26 and an arcuate surface portion 27 are formed continuously.

Note that the second member 20 of the present embodiment is manufactured by performing pressing on a single metal plate, but is not necessarily limited to this. For example, the second member 20 may be manufactured by performing pressing on two separate metal plates, and then joining and integrating the metal plates.

In addition, the attachment portion 21 is not limited to a cylindrical shape, and may have, for example, a rectangular tube shape, a prismatic shape, or a plate shape.

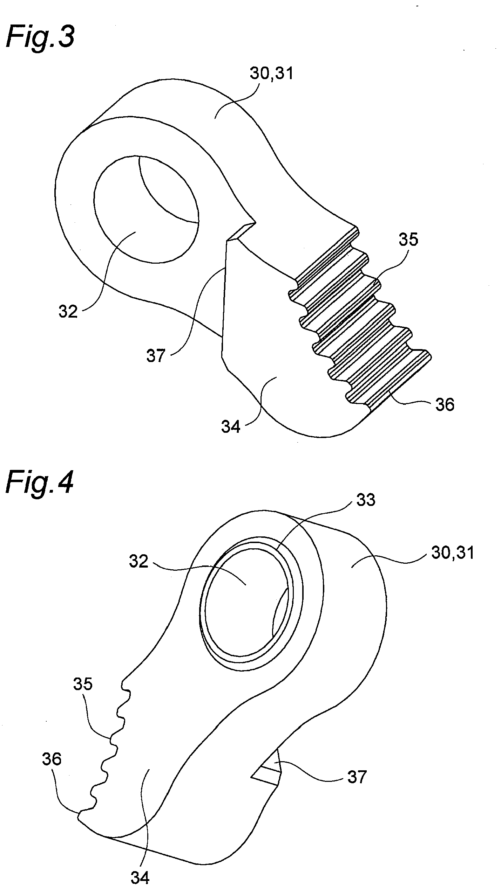

As illustrated in FIGS. 3 and 4, the claw member 30 has a substantially cylindrical claw member main body 31 provided with a shaft hole 32. Furthermore, the claw member 30 has an annular rib 33 (FIG. 4) provided along an opening edge portion on one side of the shaft hole 32 in a protruding manner. The claw member 30 includes a wide control receiving portion 34 extending inward from the outer circumferential surface of the claw member main body 31. The control receiving portion 34 has an inward surface provided with a toothed surface 35 in which a plurality of claw portions are arranged side by side, and in particular, has an engaging claw portion 36 disposed at the lowermost end of the toothed surface 35. The claw member 30 is provided with a step portion 37 in order to secure a space for assembling the spring member 40 to be described later.

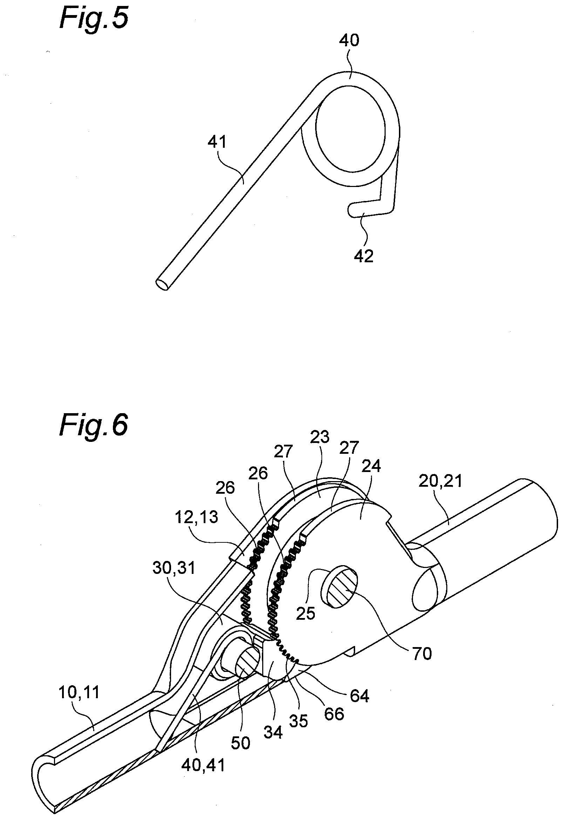

As illustrated in FIG. 5, the spring member 40 is formed of a coil spring into which the auxiliary shaft 50 described later can be inserted. The spring member 40 has a first end portion 41 extending linearly, and a second end portion 42 bent in a substantially L shape.

The spring member 40 according to the present embodiment is not limited to a coil spring, and may be formed of a leaf spring. In such a case, the member may be disposed at an appropriate position inside the first member 10, for example, on the bottom surface of the first member 10.

As illustrated in FIG. 2, the claw control member 60 has a disk-shaped claw control member main body 61 provided with a shaft hole 62. Annular ribs 63 and 63 are provided, in a protruding manner, at respective opening edge portions on both sides of shaft hole 62. Furthermore, the claw control member main body 61 has the outer circumferential surface provided with a first control portion 64 extending toward the claw member 30. The first control portion 64 has an inward surface with the lower end provided with a claw receiving portion 65 and has a distal end with a lower surface provided with a position restricting surface 66.

Next, an assembling method of the present embodiment will be described.

The auxiliary shaft 50 is inserted from the first bearing hole 15 provided in the side wall portion 13 of the first member 10, and is inserted through the claw member 30 and the spring member 40 provided between the side wall portions 13 and 14 in advance. Then, the auxiliary shaft 50 is inserted into the first bearing hole 15 of the side wall portion 14 to be positioned. In this process, the spring member 40 has the first end portion 41 brought into pressure contact with the inner circumferential surface of the first member 10, and has the second end portion 42 engaged with a lower side edge portion of the claw member 30. To achieve this state, biasing force is applied to the claw member 30 to make the toothed surface 35 constantly be in pressure contact with the gear plate portions 23 and 24.

On the other hand, after the claw control member 60 is inserted and positioned between the gear plate portions 23 and 24, the gear plate portions 23 and 24 are assembled between the side wall portions 13 and 14. The main shaft 70 is inserted into the second bearing hole 16 of the first member 10, the shaft hole 25 of the second member 20, and the shaft hole 62 of the claw control member 60.

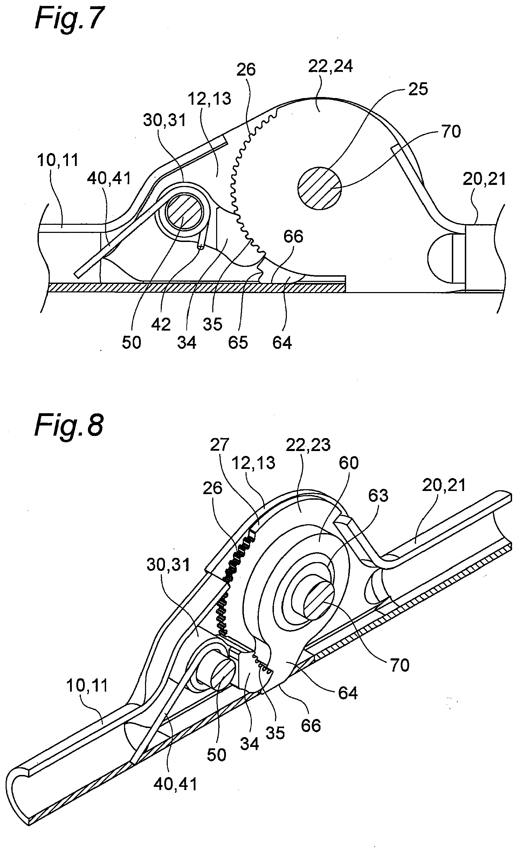

Then, both ends of the auxiliary shaft 50 and the main shaft 70 are caulked and fixed, and the assembly work is completed (FIGS. 6 and 7) . As a result, the claw control member 60 is sandwiched between the two gear plate portions 23 and 24 while receiving a predetermined pressure. This results in the claw control member 60 driven to be rotated by the rotation of the second member 20.

Next, how the angle adjustment metal fitting according to the first embodiment is used will be described.

In the initial state as illustrated in FIGS. 6 to 9, the bottom surface of the first member 10 and the bottom surface of the second member 20 are in contact with each other, and thus the second member 20 cannot rotate in the clockwise direction. In this state, the toothed surface 35 is in mesh with the gear portion 26, with the claw member 30 biased in the counterclockwise direction by the spring force applied by the spring member 40. The position restricting surface 66 of the claw control member 60 is in contact with the inner bottom surface of the first member 10.

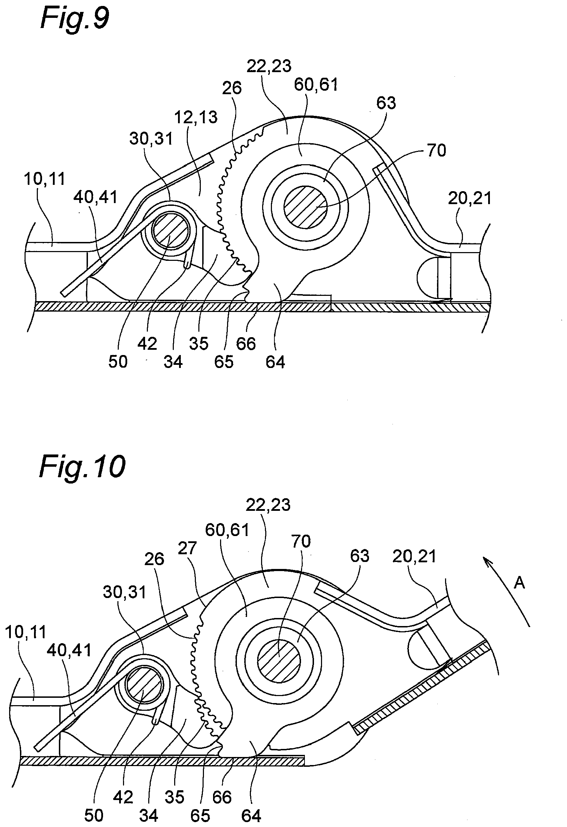

A raising action in the counterclockwise direction (arrow A) as illustrated in FIG. 10 causes the gear portion 26 to climb over the claw portions of the toothed surface 35 of the claw member one by one, producing a clicking sound. With this action, the claw control member 60 tries to rotate together with the second member 20, but has the position restricted due to the position restricting surface 66 of the claw control member 60 being in contact with the bottom surface of the first member 10, and thus only the second member 20 rotates.

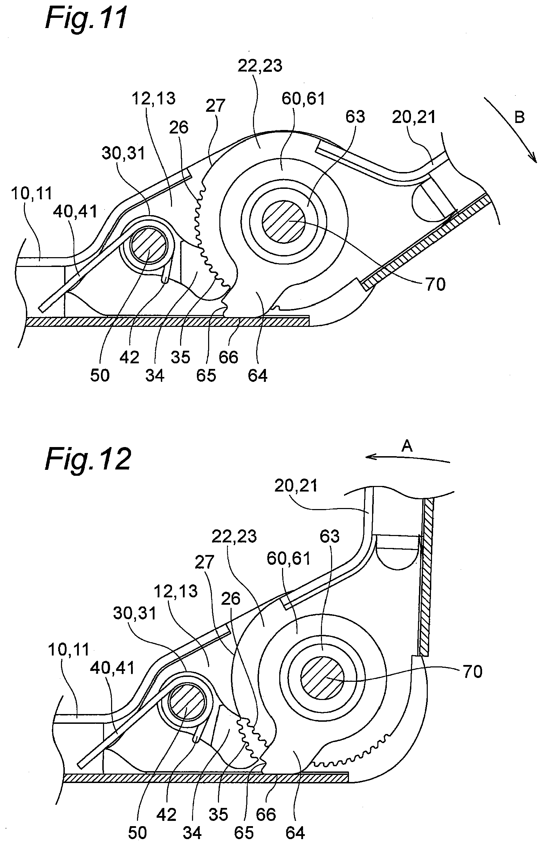

Then, when the second member 20 raised to a desired angle receives a load in the clockwise direction (arrow B) as illustrated in FIG. 11, the gear portion 26 of the second member 20 meshes with the toothed surface 35 of the claw member 30. As a result, the second member 20 cannot rotate in the clockwise direction (arrow B), and thus is held at the desired angle.

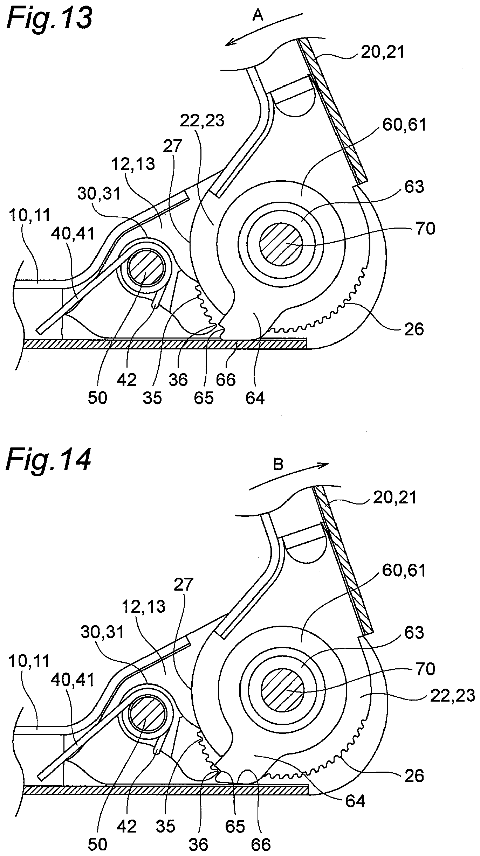

Furthermore, as illustrated in FIG. 12, when the second member 20 is rotated in the counterclockwise direction (arrow A) to be raised vertically, the arcuate surface portion 27 continuous to the gear portion 26 comes into contact with the toothed surface 35 of the claw member 30 . Thus, the claw member 30 rotates about the auxiliary shaft 50 in the clockwise direction (arrow B) against the spring force of the spring member 40 to be lowered. As a result, the toothed surface 35 climbs over the arcuate surface portion 27 (see FIG. 13). In this process, the claw control member 60 does not rotate together with the second member 20 because the position restricting surface 66 of the claw control member 60 is still in contact with the bottom surface of the first member 10.

Then, when the second member 20 is pulled back in the clockwise direction (arrow B), the claw control member 60 rotates together with the second member 20. Thus, the position restricting surface 66 of the claw control member 60 is slightly lifted from the bottom surface of the first member 10, and the engaging claw portion 36 of the claw member 30 engages with the claw receiving portion 65 of the claw control member 60 (see FIG. 14). As a result, the position of the claw control member 60 is restricted, and the rotation of the second member 20 in the clockwise direction (arrow B) does not involve the rotation of the claw control member 60.

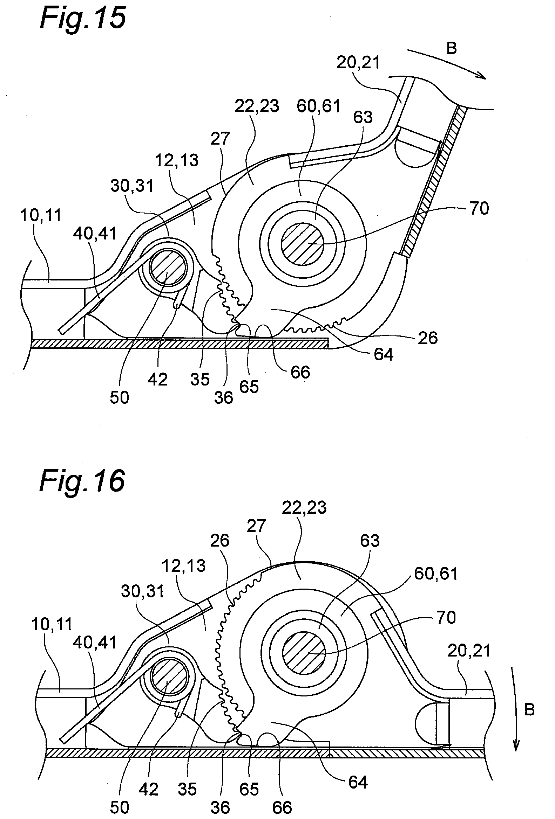

When the second member 20 continues to further rotate in the clockwise direction (arrow B), the claw control member 60 continues to restrict the position of the claw member 30. Thus, the toothed surface 35 of the claw member 30 does not mesh with the gear portion 26 of the second member 20 and thus is in the released state, so that the second member 20 can rotate to the horizontal direction without producing a clicking sound (see FIG. 16).

Then, when the second member 20 reaches the horizontal position, the bottom surface of the first member 10 and the bottom surface of the second member 20 are in contact with each other, and thus the second member 20 cannot further rotate in the clockwise direction (arrow B).

In this state, the position restricting surface 66 of the claw control member 60 is at a position slightly lifted from the bottom surface of the first member 10.

Then, when the second member 20 is rotated in the counterclockwise direction (arrow A) while still being in the released state, the claw control member 60 rotates together in the counterclockwise direction (arrow A). Therefore, the position restricting surface 66 comes into contact with the bottom surface of the first member 10 to have the position restricted. As a result, the engaging claw portion 36 of the claw member 30 is disengaged from the claw receiving portion 65 of the claw control member 60, and the state illustrated in FIG. 9 is established again to enable the second member 20 to be adjusted to a desired angle.

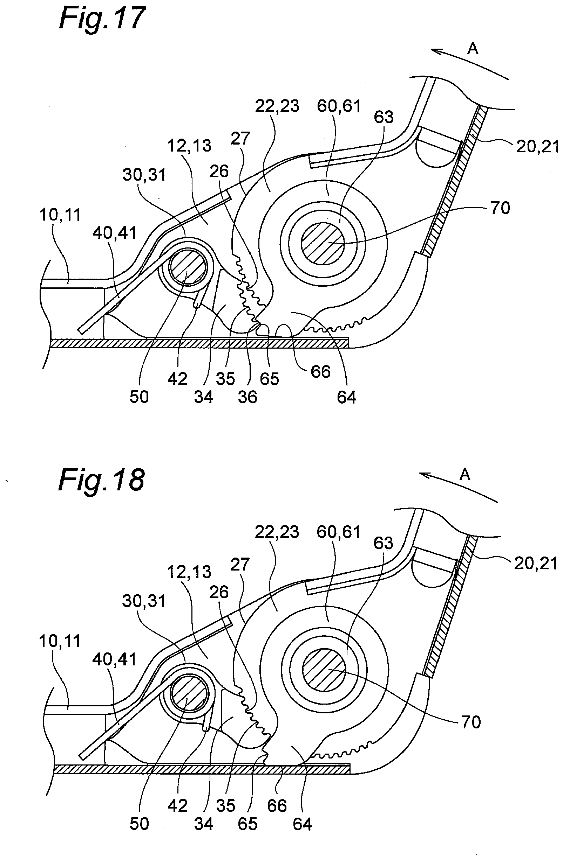

When the second member 20 illustrated in FIG. 15 for example rotates in the counterclockwise direction (arrow A) as illustrated in FIG. 17 without being tilted to the horizontal position, the claw control member 60 rotates together with the second member 20. With the claw control member 60 thus also rotating in the counterclockwise direction (arrow A), the position restricting surface 66 of the claw control member 60 moves downward, and comes into contact with the bottom surface of the first member 10 to have the position restricted. As a result, the engaging claw portion 36 of the claw member 30 is disengaged from the claw receiving portion 65 of the claw control member 60, and the claw member 30 rotates in the counterclockwise direction about the auxiliary shaft 50 due to the spring force of the spring member 40. Thus, the toothed surface 35 of the claw member 30 meshes with the gear portion 26. As a result, as illustrated in FIG. 18, even when a load in the clockwise direction (arrow B) is applied to the second member 20 after the angle is adjusted to a desired angle by rotating the second member 20 in the counterclockwise direction (arrow A), the rotation of the second member 20 is restricted.

Thus, with the invention of the present application, the angle of the backrest of the legless chair or the like can be adjusted to a desired angle without tilting the backrest to the horizontal position. Thus, for example, even when there is not so much space between a wall and the backrest of the legless chair or the like, as in a case of a legless chair, a sofa, or the like arranged near the wall, the backrest can be adjusted to a desired angle, whereby a legless chair or the like with high usability can be advantageously obtained.

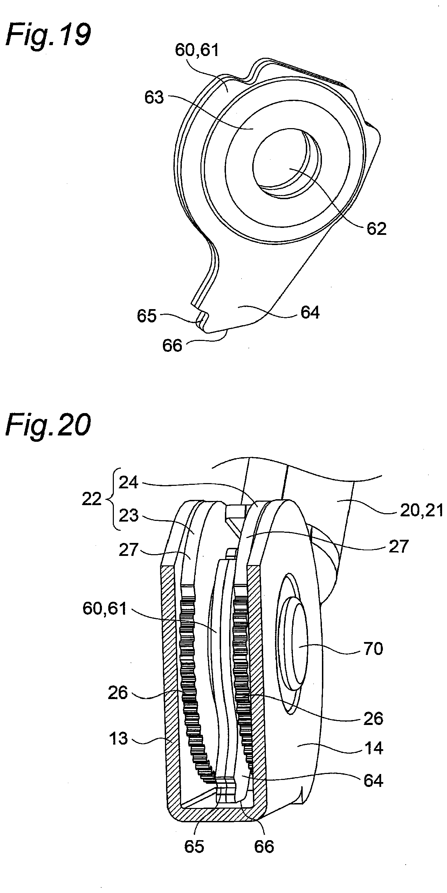

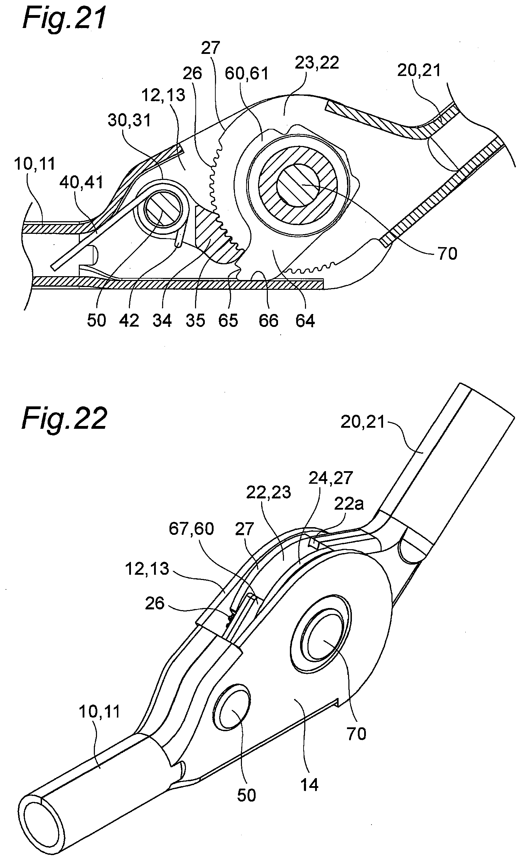

As illustrated in FIGS. 19 and 21, the second embodiment is substantially the same as the first embodiment described above, but is different therefrom in that the claw control member 60 is produced by joining and integrating two metal plates.

Specifically, in the present embodiment, the claw control member 60 is formed by joining and integrating two metal plates that have been subjected to bulging to have the rib 63 bulging.

With the present embodiment, as illustrated in FIG. 20, when the claw control member 60 is sandwiched between the two gear plate portions 23 and 24, the rib 63 is elastically deformed. Such elastic deformation of the rib 63 absorbs the error in the component dimensions and in assembly. As a result, high dimensional accuracy and high assembly accuracy are not required for the component including the claw control member 60. Thus, manufacturing and assembly can be advantageously facilitated.

The other configurations are the same as those of the first embodiment described above, and the same parts are therefore given the same numbers and the description thereof will be omitted.

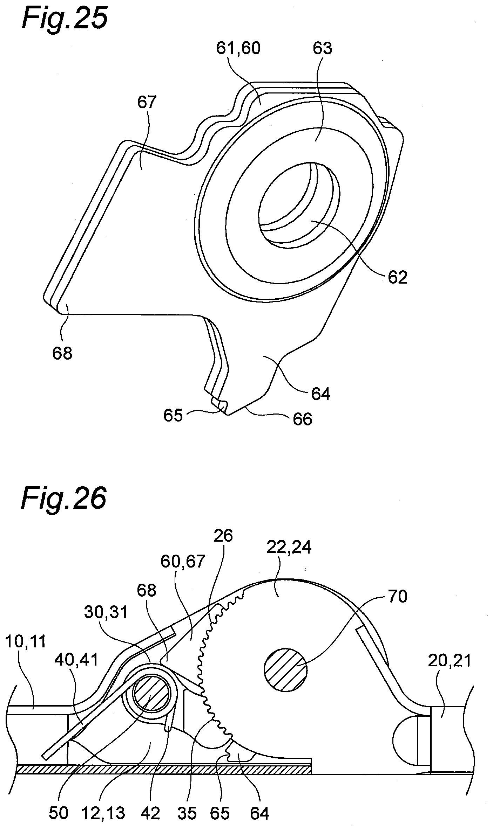

As illustrated in FIGS. 22 to 37, the third embodiment is substantially the same as the first embodiment described above, but is different therefrom in that the claw control member main body 61 of the claw control member 60 is provided with a second control portion 67 as illustrated in FIG. 25.

As illustrated in FIG. 26, a position restriction corner part 68 of the second control portion 67 is brought into contact with the claw member main body 31 of the claw member 30, to restrict the position of the claw control member 60. Therefore, the second control portion 67 is designed to have the outer dimensions enabling the position restriction corner part 68 to come into contact with the claw member main body 31, before the position restricting surface 66 of the first control portion 64 comes into contact with the bottom surface of the first member 10. Thus, with the present embodiment, the position restricting surface 66 of the claw control member 60 does not come into contact with the bottom surface of the first member 10.

The other configurations are almost the same as those of the first embodiment described above, and the same parts are therefore given the same numbers and the description thereof will be omitted.

Next, how the angle adjustment metal fitting according to the third embodiment is used will be described.

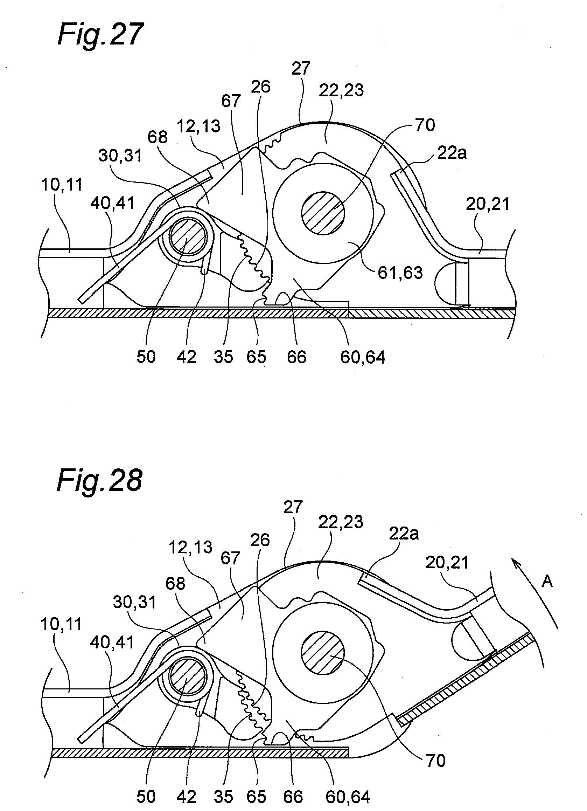

In the initial state as illustrated in FIGS. 26 and 27, the bottom surface of the first member 10 and the bottom surface of the second member 20 are in contact with each other, and thus the second member 20 cannot rotate in the clockwise direction. In this state, the toothed surface 35 is in mesh with the gear portion 26, with the claw member 30 biased in the counterclockwise direction by the spring force applied by the spring member 40. The position restriction corner part 68 of the claw control member 60 is in contact with the claw member main body 31 of the claw member 30.

A raising action in the counterclockwise direction (arrow A) as illustrated in FIG. 28 causes the gear portion 26 to climb over the claw portions of the toothed surface 35 of the claw member 30 one by one, producing a clicking sound. With this action, the claw control member 60 tries to rotate together with the second member 20, but has the position restricted due to the position restriction corner part 68 of the claw control member 60 being in contact with the claw member main body 31, and thus only the second member 20 rotates.

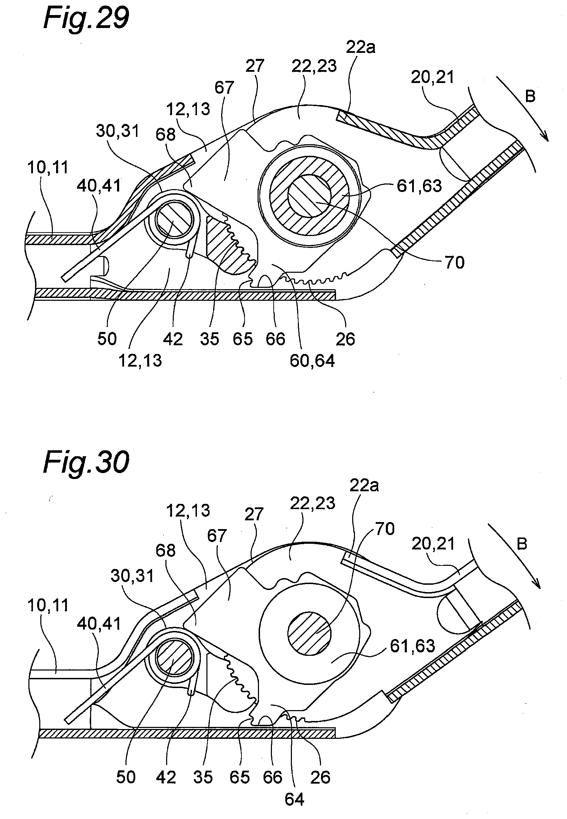

Then, when the second member 20 is raised to a desired angle and stopped, the toothed surface 35 of the claw member 30 meshes with the gear portion 26 of the second member 20. Thus, as illustrated in FIGS. 29 and 30, even when a load is applied to the second member 20 in the clockwise direction (arrow B), the second member 20 cannot rotate in the clockwise direction (arrow B) and thus is held at the desired angle.

In FIG. 29, a state in which the first end portion 41 of the spring member 40 is in contact with the inner circumferential surface of the first member is also illustrated.

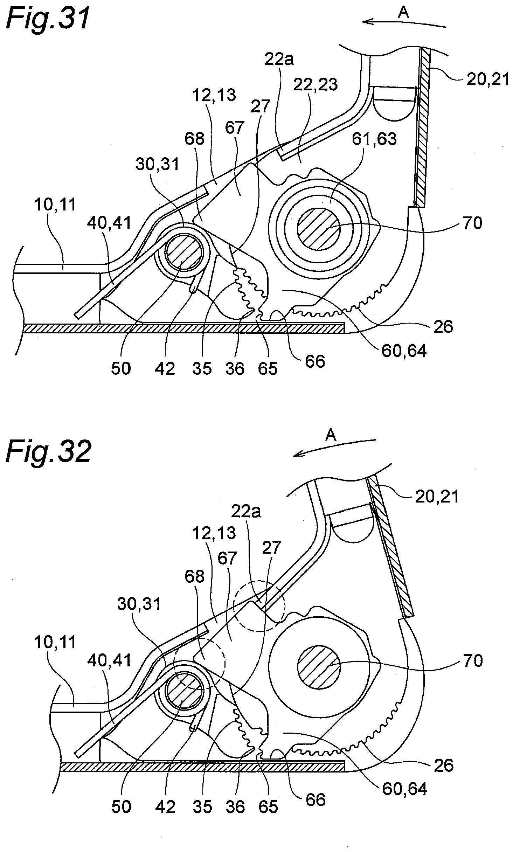

Furthermore, as illustrated in FIG. 31, when the second member 20 is rotated in the counterclockwise direction (arrow A) to be raised vertically, the arcuate surface portion 27 continuous to the gear portion 26 comes into contact with the toothed surface 35 of the claw member 30. Thus, the claw member 30 rotates about the auxiliary shaft 50 in the clockwise direction against the spring force of the spring member 40 to be lowered. As a result, the toothed surface 35 starts to climb over the arcuate surface portion 27. In this process, the position restriction corner part 68 of the claw control member 60 remains in contact with the claw member main body 31, and thus does not rotate with the second member 20. Furthermore, the position restricting surface 66 is in a state of being lifted from the bottom surface of the first member 10. When the second member 20 further rotates in the counterclockwise direction (arrow A), as illustrated in FIG. 32, a position restricting rib 22a of the second member 20 comes into contact with the second control portion 67, whereby the position of the second member 20 itself is restricted. A contact portion is illustrated in two circles drawn by dotted lines in FIG. 32.

With the present embodiment, the rotation operation of the second member 20 can be suppressed to the minimum, and an angle adjustment metal fitting with high usability can be advantageously obtained.

The position restricting rib 22a may be provided as necessary, and the outer dimensions thereof can be adjusted to adjust the rotation angle of the second member 20.

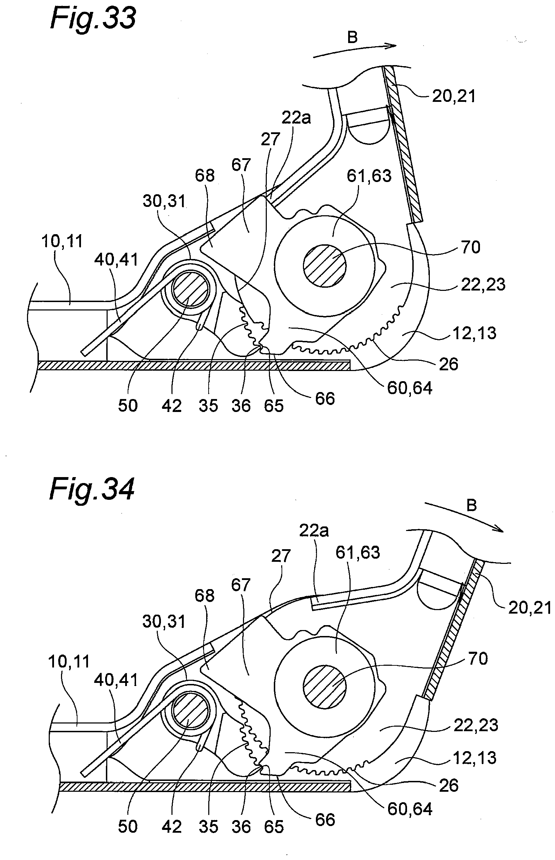

Then, when the second member 20 is pulled back in the clockwise direction (arrow B), the claw control member 60 rotates together with the second member 20. Therefore, the position restriction corner part 68 of the claw control member 60 is separated from the claw member main body 31, the engaging claw portion 36 of the claw member 30 engages with the claw receiving portion 65 of the claw control member 60, whereby the position of the claw control member 60 is restricted (see FIG. 33) . As a result, even if the second member 20 rotates in the clockwise direction (arrow B) as illustrated in FIG. 34, the claw control member 60 does not rotate together with the second member 20.

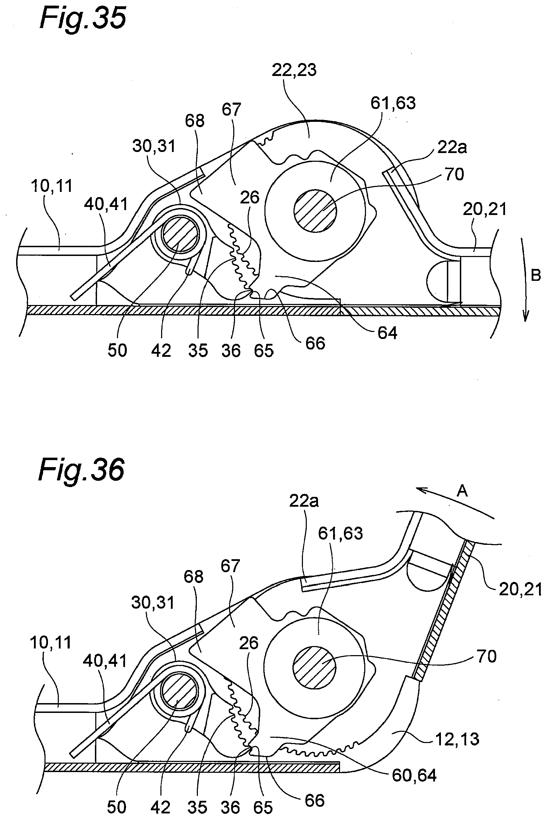

When the second member 20 continues to further rotate in the clockwise direction (arrow B), the claw control member 60 continues to restrict the position of the claw member 30. Thus, the toothed surface 35 of the claw member 30 does not mesh with the gear portion 26 of the second member 20 and thus is in the released state, so that the second member 20 can rotate to the horizontal position without producing a clicking sound (see FIG. 35) .

Then, when the second member 20 rotates to the horizontal position, the bottom surface of the first member 10 and the bottom surface of the second member 20 are in contact with each other, and thus the second member 20 cannot further rotate in the clockwise direction (arrow B).

In this state, the position restriction corner part 68 of the claw control member 60 is at a position separated from the claw member main body 31. The position restricting surface 66 of the claw control member 60 is in a state of being slightly lifted from the bottom surface of the first member 10.

Then, when the second member 20 is rotated in the counterclockwise direction (arrow A) while still being in the released state, the claw control member 60 rotates together in the counterclockwise direction (arrow A). Thus, the position restriction corner part 68 comes into contact with the claw member main body 31 to have the position restricted, whereby the rotation of the claw control member 60 is disabled. As a result, the engaging claw portion 36 of the claw member 30 is disengaged from the claw receiving portion 65 of the claw control member 60, and the state illustrated in FIG. 30 is established again to enable the second member 20 to be adjusted to a desired angle.

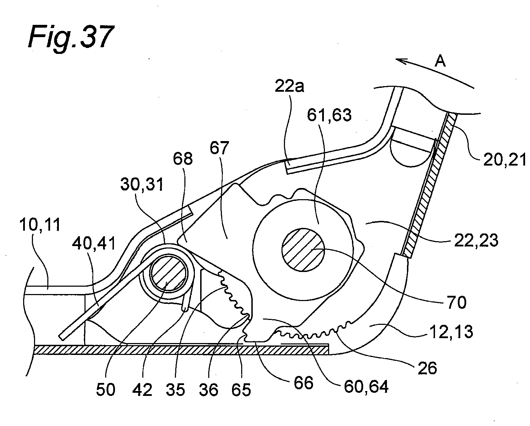

When the second member 20 rotates, from the position illustrated in FIG. 34 for example, in the counterclockwise direction (arrow A) as illustrated in FIG. 36 without lying horizontally, the position of the claw control member 60 is restricted due to the position restriction corner part 68 thereof being in contact with the claw member main body 31. Therefore, the claw control member 60 cannot corotate, and the engaging claw portion 36 of the claw member 30 is disengaged from the claw receiving portion 65 . As a result, the claw member 30 rotates in the counterclockwise direction about the auxiliary shaft 50 due to the spring force of the spring member 40, and the toothed surface 35 of the claw member 30 meshes with the gear portion 26 . Thus, as illustrated in FIG. 37, even when a load in the clockwise direction (arrow B) is applied to the second member 20 after the angle is adjusted to a desired angle by rotating the second member 20 in the counterclockwise direction (arrow A), the rotation of the second member 20 is restricted.

Thus, also with the present embodiment, the angle of the backrest of the legless chair or the like can be adjusted to a desired angle without tilting the backrest to the horizontal position. Thus, for example, even when there is not so much space between a wall and the backrest of the legless chair or the like, as in a case of a legless chair, a sofa, or the like arranged near the wall, the backrest can be adjusted to a desired angle, whereby a legless chair or the like with high usability can be advantageously obtained.

In the present embodiment, the position restriction corner part 68 of the claw control member 60 is brought into contact with the claw member main body 31 of the claw member 30, to restrict the position of the claw control member 60. The claw member 30 is rotatably supported by the auxiliary shaft 50 inserted in the first bearing hole 15 of the first member 10. The dimensional accuracy of the distance between the fulcrums of the first bearing hole 15 and the second bearing hole 16 is high. Thus, with the present embodiment, an assembly error between the claw member 30 and the claw control member 60 is small, whereby an angle adjustment metal fitting with a small variation in operation characteristics can be advantageously obtained.

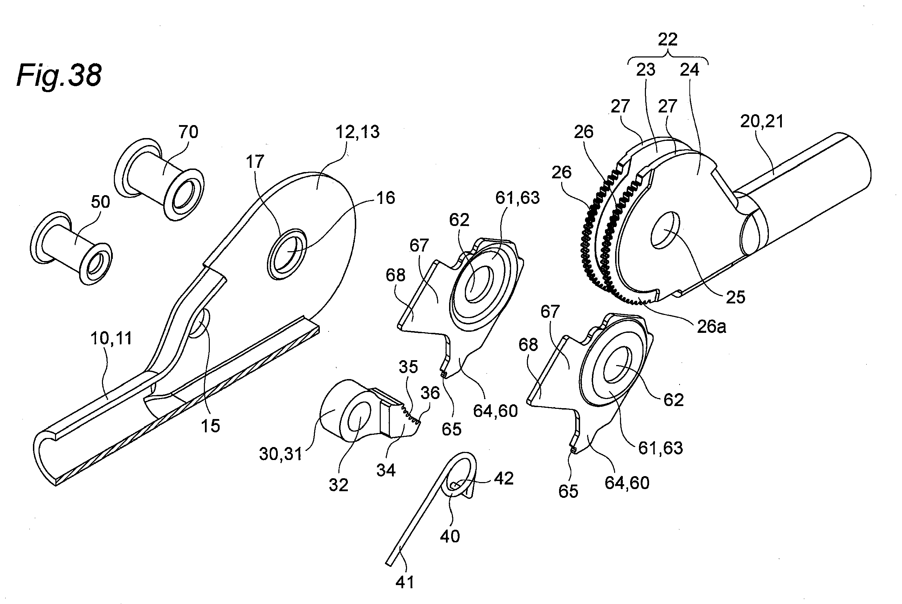

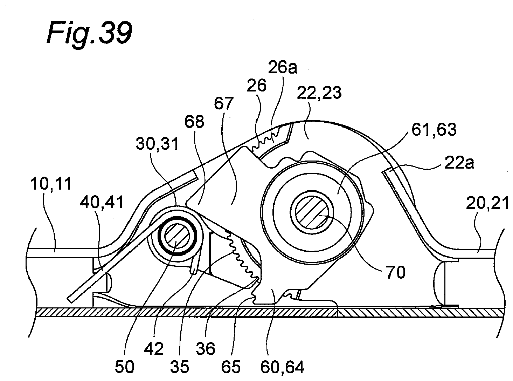

As illustrated in FIGS. 38 and 39, the fourth embodiment is substantially the same as the above-described embodiment, but is different therefrom in that step portions 26a are provided in the gear plate portions 23 and 24 when the gear portions 26 are processed. This is to prevent burrs generated in the plate thickness direction during processing from coming into contact with the inward surfaces of the gear plate portions 23 and 24. Therefore, the work process for removing the burr can be advantageously omitted.

Further, the control receiving portion 34 of the claw member 30 has an outward surface being substantially linear as compared with the above-described embodiment, whereby design and manufacture are advantageously facilitated.

The other configurations are almost the same as those of the third embodiment above, and the same parts are therefore given the same numbers and the description thereof will be omitted.

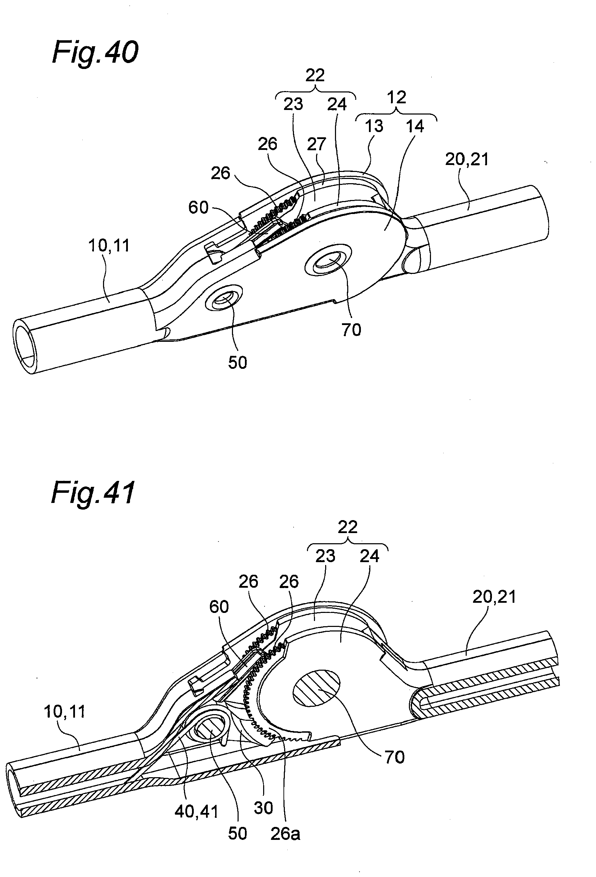

As illustrated in FIGS. 40 to 45, the fifth embodiment is substantially the same as the embodiments described above, but is different therefrom in that the claw member 30 is formed by joining two split pieces 30a and 30b. The split pieces 30a and 30b are respectively provided with step portions 37 and 37, in order to secure a space for assembling the spring member 40 formed by bending a linear spring member.

The claw member 30 of the present embodiment can be manufactured from a metal plate thinner than that in the above-described embodiment, and thus can be easily manufactured at a low cost.

The split pieces 30a and 30b can respectively follow and mesh with the corresponding gear portions 26 and 26. Therefore, what is known as partial contact can be avoided even if dimensional accuracy and positioning accuracy of the gear portions 26 and 26 vary.

The other configurations are almost the same as those of the embodiments above, and the same parts are therefore given the same numbers and the description thereof will be omitted.

The angle adjustment metal fitting according to the present invention can be applied not only to a legless chair and a sofa but also to other types of furniture.

In the above-described embodiment, a case is described where a part of the claw control member 60 is positioned by being brought into contact with the bottom surface of the first member 10 or the claw member main body 31. However, the present invention is not necessarily limited thereto, and it is a matter of course that a part of the claw control member 60 may be brought into contact with another portion in the first member 10 for the position restriction.

### REFERENCE SIGNS LIST

- 10: first member
- 11: attachment portion
- 12: rotation receiving portion
- 13: side wall portion
- 14: side wall portion
- 15: first bearing hole
- 16: second bearing hole
- 20: second member
- 21: attachment portion
- 22: rotating portion
- 22a: position restricting rib
- 23: gear plate portion
- 24: gear plate portion
- 25: shaft hole
- 26: gear portion
- 27: arcuate surface portion
- 27a: step portion
- 30: claw member
- 30a: split piece
- 30b: split piece
- 31: claw member main body
- 32: shaft hole
- 33: rib
- 34: control receiving portion
- 35: toothed surface
- 36: engaging claw portion
- 37: step portion
- 40: spring member
- 41: first end portion
- 42: second end portion
- 50: auxiliary shaft
- 60: claw control member
- 61: claw control member main body
- 62: shaft hole
- 63: rib
- 64: first control portion
- 65: claw receiving portion
- 66: position restricting surface
- 67: second control portion
- 68: position restriction corner part
- 70: main shaft

## Claims

1. An angle adjustment metal fitting comprising:
a first member (10) including a rotation receiving portion (12) having a pair of opposing side wall portions (13) and (14), the rotation receiving portion (12) having a main shaft (70) and an auxiliary shaft (50) inserted in parallel to each other while being separated by a predetermined distance;
a second member (20) including a rotating portion (22) having a gear portion (26) and an arcuate surface portion (27) continuous to the gear portion (26) the second member (20) being provided between the side wall portions (13) and (14) of the first member (10) the rotating portion (22) being supported to be rotatable about the main shaft (70);
a claw member (30) having an inward surface of a control receiving portion (34) extending from a claw member main body (31), provided with a toothed surface (35) including a plurality of claw portions arranged side by side, the claw member (30) being rotatably supported by the auxiliary shaft (50) of the first member (10);
a spring member (40) that is attached in the first member (10) and applies biasing force for rotating the claw member (30) toward the second member (20); and
a claw control member (60) that includes a first control portion (64) extending from a claw control member main body (61) , is rotatably supported by the main shaft (70), and is capable of rotating together with the second member (20),
wherein the claw control member (60) has a position restricted so as not to rotate together while the second member (20) relatively rotates in a folding direction, and a meshing state between the gear portion (26) of the second member (20) and the toothed surface (35) of the claw member (30) is released when the toothed surface (35) of the claw member (30) climbs over the arcuate surface portion (27) of the rotating portion (22),
while the second member (20) then relatively rotates in an unfolding direction, the first control portion (64) of the claw control member (60) that rotates together with the second member (20) restricts a position of the claw member (30), and the toothed surface (35) of the claw member (30) has a position restricted so as not to mesh with the gear portion (26) of the second member (20), and
when the second member (20) is then operated to be relatively rotated by a predetermined small angle in the folding direction, the position of the claw control member (60) that rotates together with the second member (20) is restricted whereas the restriction of the position of the claw member (30) by the claw control member (60) is released, to make the toothed surface (35) of the claw member (30) mesh with the gear portion (26) of the second member (20) to restrict the relative rotation of the second member(20) in the unfolding direction.

2. The angle adjustment metal fitting according to claim 1, wherein the first control portion (64) extending from the claw control member main body (61) of the claw control member (60) is brought into contact with a bottom surface of the first member (10) to restrict the position of the claw control member (60) itself.

3. The angle adjustment metal fitting according to claim 1, wherein a second control portion (67) extending from the claw control member main body (61) of the claw control member (60) is brought into contact with the claw member main body (31) of the claw member (30) to restrict the position of the claw control member (60) itself.

4. The angle adjustment metal fitting according to claim 3, wherein a position restricting rib (22a) of the second member (20) is brought into contact with the second control portion (67) that comes into contact with the claw member main body (31) of the claw member (30) to restrict the position of the second member (20) itself.

5. The angle adjustment metal fitting according to any one of claims 1 to 4, wherein the claw member (30) is formed by joining two metal plates.

6. The angle adjustment metal fitting according to any one of claims 1 to 5, wherein annular ribs (63) are provided to respective opening edge portions of a shaft hole (62) of the claw control member (60).

7. The angle adjustment metal fitting according to any one of claims 1 to 5, wherein the claw control member (60) is formed by joining and integrating two metal plates having annular ribs (63) formed by pressing.

8. The angle adjustment metal fitting according to any one of claims 1 to 7, wherein the spring member (40) is formed by bending a linear spring member.

9. The angle adjustment metal fitting according to any one of claims 1 to 7, wherein the spring member (40) is formed of a leaf spring.

10. The angle adjustment metal fitting according to any one of claims 1 to 9, wherein the gear portion (26) is provided with a step portion (26a) positioned more on an inner side than the arcuate surface portion in a plate thickness direction.

11. A legless chair comprising the angle adjustment metal fitting according to any one of claims 1 to 10.

12. A sofa comprising the angle adjustment metal fitting according to any one of claims 1 to 10.

## Patentansprüche

1. Winkelverstellbarer Metallbeschlag, der Folgendes umfasst:
ein erstes Element (10), das einen Rotationsaufnahmeabschnitt (12) mit einem Paar von gegenüberliegenden Seitenwandabschnitten (13) und (14) umfasst, wobei der Rotationsaufnahmeabschnitt (12) eine Hauptwelle (70) und eine Nebenwelle (50) aufweist, die parallel zueinander eingesetzt sind, wobei sie durch einen vorbestimmten Abstand voneinander getrennt sind;
ein zweites Element (20), das einen Rotationsabschnitt (22) mit einem Zahnradabschnitt (26) und einem mit dem Zahnradabschnitt (26) kontinuierlich ausgebildeten Bogenförmige-Fläche-Abschnitt (27) umfasst, wobei das zweite Element (20) zwischen den Seitenwandabschnitten (13) und (14) des ersten Elements (10) bereitgestellt ist, wobei der Rotationsabschnitt (22) gelagert ist, um um die Hauptwelle (70) rotierbar zu sein;
ein Klauenelement (30) mit einer Innenfläche eines Steuerungsaufnahmeabschnitts (34), der sich von einem Klauenelement-Hauptkörper (31), der mit einer gezahnten Fläche (35) bereitgestellt ist und eine Vielzahl von nebeneinander angeordneten Klauenabschnitten umfasst, aus erstreckt, wobei das Klauenelement (30) durch die Nebenwelle (50) des ersten Elements (10) gelagert ist;
ein Federelement (40), das in dem ersten Element (10) befestigt ist und eine Vorspannkraft beaufschlagt, um das Klauenelement (30) in Richtung zum zweiten Element (20) hin zu rotieren; und
ein Klauensteuerelement (60), das einen ersten Steuerabschnitt (64) umfasst, der sich von einem Klauensteuerelement-Hauptkörper (61) aus erstreckt, durch die Hauptwelle (70) rotierbar gelagert ist und in der Lage ist, zusammen mit dem zweiten Element (20) zu rotieren, wobei das Klauensteuerelement (60) eine Position aufweist, die eingeschränkt ist, so dass sie nicht mitrotiert, während das zweite Element (20) relativ in eine Faltrichtung rotiert, und ein Zustand des Eingriffs zwischen dem Zahnradabschnitt (26) des zweiten Elements (20) und der gezahnten Fläche (35) des Klauenelements (30) gelöst wird, wenn die gezahnte Fläche (35) des Klauenelements (30) über den Bogenförmige-Fläche-Abschnitt (27) des Rotationsabschnitts (22) sich hinwegbewegt, während das zweite Element (20) dann relativ in eine Entfaltungsrichtung rotiert, der erste Steuerabschnitt (64) des Klauensteuerelements (60), das zusammen mit dem zweiten Element (20) rotiert, eine Position des Klauenelements (30) einschränkt und die gezahnte Oberfläche (35) des Klauenelements (30) eine Position aufweist, die so eingeschränkt ist, dass sie nicht mit dem Zahnradabschnitt (26) des zweiten Elements (20) in Eingriff gelangt, und, wenn das zweite Element (20) dann betätigt wird, um relativ um einen vorbestimmten kleinen Winkel in Faltrichtung zu rotieren, die Position des Klauensteuerelements (60), das zusammen mit dem zweiten Element (20) rotiert, eingeschränkt ist, während die Einschränkung der Position des Klauenelements (30) durch das Klauensteuerelement (60) gelöst wird, um die gezahnte Oberfläche (35) des Klauenelements (30) mit dem Zahnradabschnitt (26) des zweiten Elements (20) in Eingriff zu bringen, um die relative Rotation des zweiten Elements (20) in die Entfaltungsrichtung einzuschränken.

2. Winkelverstellbarer Metallbeschlag nach Anspruch 1, wobei der erste Steuerabschnitt (64), der sich von dem Klauensteuerelement-Hauptkörper (61) des Klauensteuerelements (60) aus erstreckt, mit einer Unterseite des ersten Elements (10) in Berührung gebracht wird, um die Position des Klauensteuerelements (60) selbst einzuschränken.

3. Winkelverstellbarer Metallbeschlag nach Anspruch 1, wobei ein zweiter Steuerabschnitt (67), der sich von dem Klauensteuerelement-Hauptkörper (61) des Klauensteuerelements (60) aus erstreckt, mit dem Klauenelement-Hauptkörper (31) des Klauenelements (30) in Berührung gebracht wird, um die Position des Klauensteuerelements (60) selbst einzuschränken.

4. Winkelverstellbarer Metallbeschlag nach Anspruch 3, wobei eine Positionseinschränkungsrippe (22a) des zweiten Elements (20) mit dem zweiten Steuerabschnitt (67) in Berührung gebracht wird, der mit dem Klauenelement-Hauptkörper (31) des Klauenelements (30) in Berührung gelangt, um die Position des zweiten Elements (20) selbst einzuschränken.

5. Winkelverstellbarer Metallbeschlag nach einem der Ansprüche 1 bis 4, wobei das Klauenelement (30) durch Verbinden von zwei Metallplatten ausgebildet ist.

6. Winkelverstellbarer Metallbeschlag nach einem der Ansprüche 1 bis 5, wobei ringförmige Rippen (63) für entsprechende Öffnungskantenabschnitte eines Wellenlochs (62) des Klauensteuerelements (60) bereitgestellt sind.

7. Winkelverstellbarer Metallbeschlag nach einem der Ansprüche 1 bis 5, wobei das Klauensteuerelement (60) durch Verbinden und Integrieren von zwei durch Pressen ausgebildeten Metallplatten mit ringförmigen Rippen (63) ausgebildet ist.

8. Winkelverstellbarer Metallbeschlag nach einem der Ansprüche 1 bis 7, wobei das Federelement (40) durch Biegen eines linearen Federelements ausgebildet ist.

9. Winkelverstellbarer Metallbeschlag nach einem der Ansprüche 1 bis 7, wobei das Federelement (40) aus einer Blattfeder ausgebildet ist.

10. Winkelverstellbarer Metallbeschlag nach einem der Ansprüche 1 bis 9, wobei der Zahnradabschnitt (26) mit einem Stufenabschnitt (26a) bereitgestellt ist, der in Plattendickenrichtung weiter innen als der Abschnitt mit gebogener Oberfläche angeordnet ist.

11. Beinloser Stuhl, der einen winkelverstellbaren Metallbeschlag nach einem der Ansprüche 1 bis 10 umfasst.

12. Sofa, das einen winkelverstellbaren Metallbeschlag nach einem der Ansprüche 1 bis 10 umfasst.

## Revendications

1. Raccord métallique de réglage d'angle comprenant : un premier élément (10) incluant une partie de réception de rotation (12) présentant une paire de parties de paroi latérale opposées (13) et (14), la partie de réception de rotation (12) présentant un arbre principal (70) et un arbre auxiliaire (50) insérés parallèlement l'un à l'autre tout en étant séparés d'une distance prédéterminée ;
un second élément (20) incluant une partie rotative (22) présentant une partie d'engrenage (26) et une partie de surface arquée (27) continue par rapport à la partie d'engrenage (26), le second élément (20) étant prévu entre les parties de paroi latérales (13) et (14) du premier élément (10), la partie rotative (22) étant supportée pour pouvoir tourner autour de l'arbre principal (70) ;
un élément de griffe (30) présentant une surface intérieure d'une partie de réception de commande (34) s'étendant à partir d'un corps principal d'élément de griffe (31), pourvu d'une surface dentée (35) incluant une pluralité de parties de griffe agencées côte à côte, l'élément de griffe (30) étant supporté de manière rotative par l'arbre auxiliaire (50) du premier élément (10) ;
un élément ressort (40) qui est fixé dans le premier élément (10) et applique une force de sollicitation pour faire tourner l'élément de griffe (30) vers le second élément (20) ; et
un élément de commande de griffe (60) qui inclut une première partie de commande (64) s'étendant depuis un corps principal d'élément de commande de griffe (61), est supporté de manière rotative par l'arbre principal (70), et est capable de tourner conjointement avec le second élément (20),
dans lequel l'élément de commande de griffe (60) présente une position restreinte de manière à ne pas tourner conjointement tandis que le second élément (20) tourne de manière relative dans une direction de pliage, et un état d'engrènement entre la partie d'engrenage (26) du second élément (20) et la surface dentée (35) de l'élément de griffe (30) est libéré lorsque la surface dentée (35) de l'élément de griffe (30) grimpe sur la partie de surface arquée (27) de la partie rotative (22),
alors que le second élément (20) tourne ensuite de manière relative dans une direction de dépliage, la première partie de commande (64) de l'élément de commande de griffe (60) qui tourne conjointement avec le second élément (20) restreint une position de l'élément de griffe (30), et la surface dentée (35) de l'élément de griffe (30) présente une position restreinte de manière à ne pas engrener avec la partie d'engrenage (26) du second élément (20), et
lorsque le second élément (20) est ensuite actionné pour être tourné de manière relative d'un petit angle prédéterminé dans la direction de pliage, la position de l'élément de commande de griffe (60) qui tourne conjointement avec le second élément (20) est restreinte tandis que la restriction de la position de l'élément de griffe (30) par l'élément de commande de griffe (60) est libérée, pour amener la surface dentée (35) de l'élément de griffe (30) à engrener avec la partie d'engrenage (26) du second élément (20) afin de restreindre la rotation relative du second élément (20) dans la direction de dépliage.

2. Raccord métallique de réglage d'angle selon la revendication 1, dans lequel la première partie de commande (64) s'étendant à partir du corps principal d'élément de commande de griffe (61) de l'élément de commande de griffe (60) est amenée en contact avec une surface inférieure du premier élément (10) pour restreindre la position de l'élément de commande de griffe (60) lui-même.

3. Raccord métallique de réglage d'angle selon la revendication 1, dans lequel une seconde partie de commande (67) s'étendant à partir du corps principal d'élément de commande de griffe (61) de l'élément de commande de griffe (60) est amenée en contact avec le corps principal d'élément de griffe (31) de l'élément de griffe (30) pour restreindre la position de l'élément de commande de griffe (60) lui-même.

4. Raccord métallique de réglage d'angle selon la revendication 3, dans lequel une nervure de limitation de position (22a) du second élément (20) est amenée en contact avec la seconde partie de commande (67) qui vient en contact avec le corps principal d'élément de griffe (31) de l'élément de griffe (30) pour limiter la position du second élément (20) lui-même.

5. Raccord métallique de réglage d'angle selon l'une quelconque des revendications 1 à 4, dans lequel l'élément de griffe (30) est formé en joignant deux plaques métalliques.

6. Raccord métallique de réglage d'angle selon l'une quelconque des revendications 1 à 5, dans lequel des nervures annulaires (63) sont prévues sur des parties de bord d'ouverture respectives d'un trou d'arbre (62) de l'élément de commande de griffe (60).

7. Raccord métallique de réglage d'angle selon l'une quelconque des revendications 1 à 5, dans lequel l'élément de commande de griffe (60) est formé par assemblage et intégration de deux plaques métalliques présentant des nervures annulaires (63) formées par pressage.

8. Raccord métallique de réglage d'angle selon l'une quelconque des revendications 1 à 7, dans lequel l'élément ressort (40) est formé en pliant un élément ressort linéaire.

9. Raccord métallique de réglage d'angle selon l'une quelconque des revendications 1 à 7, dans lequel l'élément ressort (40) est formé d'un ressort à lame.

10. Raccord métallique de réglage d'angle selon l'une quelconque des revendications 1 à 9, dans lequel la partie d'engrenage (26) est pourvue d'une partie de gradin (26a) positionnée plus sur un côté intérieur que la partie de surface arquée dans une direction d'épaisseur de plaque.

11. Raccord métallique de réglage d'angle selon l'une quelconque des revendications 1 à 10.

12. Canapé comprenant le raccord métallique de réglage d'angle selon l'une quelconque des revendications 1 à 10.
